# EUROPEAN PATENT SPECIFICATION

(11) **EP 0 670 843 B1**
(45) Date of publication and mention of the grant of the patent: **26.02.1997**
(21) Application number: 94902345.1
(22) Date of filing: 22.11.1993
(51) Int. Cl.: C07F 9/6574, C08K 5/527

(54) **ALPHA CRYSTALLINE MODIFICATION OF 2,2',2"-NITRILO TRIETHYL-TRIS-(3,3',5,5'-TETRA-TERT-BUTYL-1,1'-BIPHENYL-2,2'-DIYL)PHOSPHITE]**
ALPHA KRISTALLINE MODIFIKATION DES 2, 2', 2''-NITRILOTRIETHYL-TRIS-(3, 3', 5 , 5'-TETRA-TERT-BUTYL-1, 1-BIPHENYL-2,2-DIYL)PHOSPHITE
MODIFICATION ALPHA-CRISTALLINE DE 2,2',2"-NITRILO TRIETHYL-TRIS-(3,3',5,5'-TETRA-TERT-BUTYL-1,1'-BIPHENYL-2,2'-DIYL)PHOSPHITE]

(30) Priority: 30.11.1992 US 983180
(43) Date of publication of application: 13.09.1995
(73) Proprietor: Ciba SC Holding AG, 4057 Basel (CH)
(72) Inventor: PASTOR, Stephen, D., Danbury, CT 06810 (US); SHUM, Sai, P., Pleasantville, NY 10572 (US); ODORISTO, Paul, A., Leonia, NJ 07605 (US)
(86) International application number: PCT/US93/11327
(87) International publication number: WO 94/12509

(56) References cited:
- EP-A- 0 026 893
- EP-A- 0 053 098

## Description

This invention pertains to a novel crystalline modification of 2,2',2"-nitrilo[triethyl-tris-(3,3',5,5'-tetra-tert-butyl-1,1'-biphenyl-2,2'-diyl) phosphite], to a process for preparing said modification and the use thereof for stabilizing organic materials against oxidative, thermal or light-induced degradation.

2,2',2"-Nitrilo[triethyl-tris-(3,3',5,5'-tetra-tert-butyl-1,1'-biphenyl-2,2'-diyl) phosphite] is a compound having the formula I

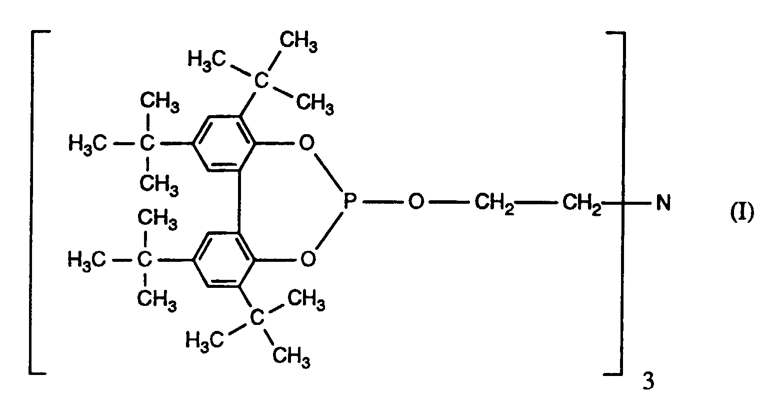

This compound of formula I is useful as a processing stabilizer for organic materials as taught in US-A-4 318 845 and US-A-4 374 219. The compound of formula I is disclosed as being a white powder melting at 121-134°C. As such, the powdery product has defects in terms of handling and apparent density, exhibiting poor flowability, meterability, storage stability and hydrolytic stability.

It has now been found that the compound of formula I can be obtained in a different crystalline modification as purified crystalline particles which exhibit acceptable properties in respect to handling, apparent density, flowability, meterability, storage stability and hydrolytic stability.

The new modification is characterized by a monoclinic crystalline form, melting in the range of 145-165°C as given by the peak temperature of the endotherm recorded by differential scanning calorimetry (DSC); and by an X-ray diffraction pattern obtained using Cu-Kα which exhibits diffraction angles (2Θ) of relative intensity given in the Table 1 below.

**Table 1:**

| Diffraction Angle (2Θ) | Relative Intensity (%) | Diffraction Angle (2Θ) | Relative Intensity (%) | Diffraction Angle (2Θ) | Relative Intensity (%) |
|---|---|---|---|---|---|
| 5.2 | 100 | 11.6 | 18 | 18.7 | 20 |
| 5.8 | 38 | 12.7 | 7 | 19.6 | 20 |
| 6.3 | 13 | 13.6 | 20 | 20.0 | 17 |
| 6.5 | 15 | 14.2 | 23 | 20.2 | 17 |
| 7.2 | 14 | 14.9 | 18 | 20.8 | 17 |
| 8.0 | 30 | 15.7 | 30 | 21.1 | 18 |
| 8.7 | 31 | 16.2 | 31 | 22.6 | 18 |
| 8.9 | 36 | 16.6 | 48 | 22.7 | 18 |
| 10.0 | 35 | 17.0 | 28 | 22.9 | 18 |
| 10.1 | 31 | 17.4 | 58 | 23.1 | 16 |
| 10.7 | 41 | 18.2 | 37 | | |

The X-ray diffraction pattern thus shows angles (2Θ) lines of very high intensity at 5.2; lines of high intensity at 10.7, 16.6 and 17.4; lines of medium intensity at 5.8, 8.0, 8.9, 10.0, 10.1, 10.7, 15.7, 16.2 and 18.2; lines of weak intensity at 6.3, 6.5, 7.2, 11.6, 12.7, 13.6, 14.2, 14.9, 17.0, 18.7 and 19.6; and a relative absolute configuration of the three stereo axes of the dibenzo[d,f][1,3,2]dioxaphosphepin rings of R*,R*,R*.

R* follows the customary convention when the absolute configuration of a molecule is unknown. The nomenclature adopted here is based on recent Chemical Abstracts Service practice as described by L. C. Cross and W. Kylne, Pure Appl. Chem. 45, 11-30 (1976).

The instant invention also relates to a process for the preparation of this novel alpha crystalline form of the compound of formula I, which comprises crystallizing or recrystallizing said compound from a mixture of an aromatic hydrocarbon solvent and an alkanol of 1 to 3 carbon atoms; from an ether solvent; from an ester solvent; or from a mixture of a halogenated aliphatic hydrocarbon solvent and an alkanol of 1 to 3 carbon atoms.

Examples of aromatic hydrocarbon solvents useful in the instant process are benzene, toluene, o-xylene, m-xylene, p-xylene, 1,2,3-trimethylbenzene, 1,3,5-trimethylbenzene, 1,2,4-trimethylbenzene, 1,2,4,5-tetramethylbenzene, ethylbenzene, cumene, o-cymene, m-cymene, p-cymene, o-diisopropylbenzene, m-diisopropylbenzene, p-diisopropylbenzene, and mixtures of such aromatic hydrocarbon solvents.

Examples of lower carbon chain alkanols of 1 to 3 carbon atoms are methanol, ethanol, 1-propanol, isopropanol and mixtures of such lower alkanols.

Examples of ester solvents are methyl formate, ethyl formate, methyl acetate, ethyl acetate, n-butyl acetate, isobutyl acetate, amyl acetate and the like.

Examples of ether solvents are diethyl ether, diisopropyl ether, methyl tert-butyl ether and the like.

Examples of halogenated aliphatic hydrocarbon solvents are methylene chloride, chloroform, 1,2-dichloroethane, 1,1,2,2-tetrachloroethane and the like.

The preferred process for preparing the novel alpha crystalline modification is by crystallizing or recrystallizing the compound of formula I from a mixture of an aromatic hydrocarbon solvent and an alkanol of 1 to 3 carbon atoms.

The preferred process for preparing the novel alpha crystalline modification is also by crystallizing or recrystallizing the compound of formula I from a mixture of benzene, toluene, o-xylene, m-xylene, p-xylene, 1,2,3-trimethylbenzene, 1,3,5-trimethylbenzene, 1,2,4-trimethylbenzene, 1,2,4,5-tetramethylbenzene, ethylbenzene, cumene, o-cymene, m-cymene, p-cymene, o-diisopropylbenzene or m-diisopropylbenzene and an alkanol of 1 to 3 carbon atoms; from methyl formate, ethyl formate, methyl acetate, ethyl acetate, n-butyl acetate, isobutyl acetate or amyl acetate; from diethyl ether, diisopropyl ether or methyl tert-butyl ether; or from a mixture of methylene chloride, chloroform, 1,2-dichloroethane or 1,1,2,2-tetrachloroethane and an alkanol of 1 to 3 carbon atoms.

An especially preferred process for preparing the novel alpha crystalline modification is by crystallizing or recrystallizing the compound of formula I from a mixture of benzene, toluene, o-xylene, m-xylene, p-xylene, 1,2,3-trimethylbenzene, 1,3,5-trimethylbenzene, 1,2,4-trimethylbenzene, 1,2,4,5-tetramethylbenzene, ethylbenzene, cumene, o-cymene, m-cymene, p-cymene, o-diisopropylbenzene, or m-diisopropylbenzene and an alkanol of 1 to 3 carbon atoms.

Of interest is also a process for preparing the novel alpha crystalline modification by crystallizing or recrystallizing the compound of formula I from a mixture of toluene and methanol; xylene and methanol; toluene and isopropanol; or, xylene and isopropanol.

Of special interest is a process for preparing the novel alpha crystalline modification by crystallizing or recrystallizing the compound of formula I from ethyl acetate or diethyl ether or from a mixture of isopropanol and dichloromethane.

A preferred embodiment of the instant process involves isolating the crystalline mass from any of the above processes and drying it under vacuum at elevated temperature.

The instant invention relates also to the alpha, monoclinic crystalline form of 2,2',2"-nitrilo[triethyl-tris-(3,3',5,5'-tetra-tert-butyl-1,1'-biphenyl-2,2'-diyl) phosphite], characterized by melting in the range of 145-165°C and by an X-ray diffraction pattern exhibiting lines of very high intensity at 5.2; lines of high intensity at 10.7, 16.6 and 17.4; lines of medium intensity at 5.8, 8.0, 8.9, 10.0, 10.1, 10.7, 15.7, 16.2 and 18.2; lines of weak intensity at 6.3, 6.5, 7.2, 11.6, 12.7, 13.6, 14.2, 14.9, 17.0, 18.7 and 19.6; and a relative configuration of the three dibenzo[d,f][1.3.2]dioxaphosphepin rings of R*, R*, R*, obtainable by crystallizing or recrystallizing said compound from a mixture of an aromatic hydrocarbon solvent and an alkanol of 1 to 3 carbon atoms; from an ether solvent; from an ester solvent; or from a mixture of a halogenated aliphatic hydrocarbon solvent and an alkanol of 1 to 3 carbon atoms.

The alpha, monoclinic crystalline form of formula I according to the invention is highly suitable for stabilizing organic materials against oxidative, thermal or light-induced degradation.

Examples of such organic materials are:
1. Polymers of monoolefins and diolefins, for example polypropylene, polyisobutylene, polybut-1-ene, poly-4-methylpent-1-ene, polyisoprene or polybutadiene, as well as polymers of cycloolefins, for instance of cyclopentene or norbornene, polyethylene (which optionally can be crosslinked), for example high density polyethylene (HDPE), low density polyethylene (LDPE), linear low density polyethylene (LLDPE), branched low density polyethylene (BLDPE).
   Polyolefins, i.e. the polymers of monoolefins exemplified in the preceding paragraph, preferably polyethylene and polypropylene, can be prepared by different, and especially by the following, methods:
   a) radical polymerisation (normally under high pressure and at elevated temperature).
   b) catalytic polymerisation using a catalyst that normally contains one or more than one metal of groups IVb, Vb, VIb or VIII of the Periodic Table. These metals usually have one or more than one ligand, typically oxides, halides, alcoholates, esters, ethers, amines, alkyls, alkenyls and/or aryls that may be either π- or σ-coordinated. These metal complexes may be in the free form or fixed on substrates, typically on activated magnesium chloride, titanium(III) chloride, alumina or silicon oxide. These catalysts may be soluble or insoluble in the polymerisation medium. The catalysts can be used by themselves in the polymerisation or further activators may be used, typically metal alkyls, metal hydrides, metal alkyl halides, metal alkyl oxides or metal alkyloxanes, said metals being elements of groups Ia, IIa and/or IIIa of the Periodic Table. The activators may be modified conveniently with further ester, ether, amine or silyl ether groups. These catalyst systems are usually termed Phillips, Standard Oil Indiana, Ziegler (-Natta), TNZ (DuPont), metallocene or single site catalysts (SSC).
2. Mixtures of the polymers mentioned under 1), for example mixtures of polypropylene with polyisobutylene, polypropylene with polyethylene (for example PP/HDPE, PP/LDPE) and mixtures of different types of polyethylene (for example LDPE/HDPE).
3. Copolymers of monoolefins and diolefins with each other or with other vinyl monomers, for example ethylene/propylene copolymers, linear low density polyethylene (LLDPE) and mixtures thereof with low density polyethylene (LDPE), propylene/but-1-ene copolymers, propylene/isobutylene copolymers, ethylene/but-1-ene copolymers, ethylene/hexene copolymers, ethylene/methylpentene copolymers, ethylene/heptene copolymers, ethylene/octene copolymers, propylene/butadiene copolymers, isobutylene/isoprene copolymers, ethylene/alkyl acrylate copolymers, ethylene/alkyl methacrylate copolymers, ethylene/vinyl acetate copolymers and their copolymers with carbon monoxide or ethylene/acrylic acid copolymers and their salts (ionomers) as well as terpolymers of ethylene with propylene and a diene such as hexadiene, dicyclopentadiene or ethylidene-norbornene; and mixtures of such copolymers with one another and with polymers mentioned in 1) above, for example polypropylene/ethylene-propylene copolymers, LDPE/ethylene-vinyl acetate copolymers (EVA), LDPE/ethylene-acrylic acid copolymers (EAA), LLDPE/EVA, LLDPE/EAA and alternating or random polyalkylene/carbon monoxide copolymers and mixtures thereof with other polymers, for example polyamides.
4. Hydrocarbon resins (for example C₅-C₉) including hydrogenated modifications thereof (e.g. tackifiers) and mixtures of polyalkylenes and starch.
5. Polystyrene, poly(p-methylstyrene), poly(α-methylstyrene).
6. Copolymers of styrene or α-methylstyrene with dienes or acrylic derivatives, for example styrene/butadiene, styrene/acrylonitrile, styrene/alkyl methacrylate, styrene/butadiene/alkyl acrylate, styrene/butadiene/alkyl methacrylate, styrene/maleic anhydride, styrene/acrylonitrile/methyl acrylate; mixtures of high impact strength of styrene copolymers and another polymer, for example a polyacrylate, a diene polymer or an ethylene/propylene/diene terpolymer, and block copolymers of styrene such as styrene/butadiene/styrene, styrene/isoprene/styrene, styrene/ethylene/butylene/styrene or styrene/ethylene/propylene/ styrene.
7. Graft copolymers of styrene or α-methylstyrene, for example styrene on polybutadiene, styrene on polybutadiene-styrene or polybutadiene-acrylonitrile copolymers; styrene and acrylonitrile (or methacrylonitrile) on polybutadiene; styrene, acrylonitrile and methyl methacrylate on polybutadiene; styrene and maleic anhydride on polybutadiene; styrene, acrylonitrile and maleic anhydride or maleimide on polybutadiene; styrene and maleimide on polybutadiene; styrene and alkyl acrylates or methacrylates on polybutadiene; styrene and acrylonitrile on ethylene/propylene/diene terpolymers; styrene and acrylonitrile on polyalkyl acrylates or polyalkyl methacrylates, styrene and acrylonitrile on acrylate/butadiene copolymers, as well as mixtures thereof with the copolymers listed under 6), for example the copolymer mixtures known as ABS, MBS, ASA or AES polymers.
8. Halogen-containing polymers such as polychloroprene, chlorinated rubbers, chlorinated or sulfochlorinated polyethylene, copolymers of ethylene and chlorinated ethylene, epichlorohydrin homo- and copolymers, especially polymers of halogen-containing vinyl compounds, for example polyvinyl chloride, polyvinylidene chloride, polyvinyl fluoride, polyvinylidene fluoride, as well as copolymers thereof such as vinyl chloride/vinylidene chloride, vinyl chloride/vinyl acetate or vinylidene chloride/vinyl acetate copolymers.
9. Polymers derived from α,β-unsaturated acids and derivatives thereof such as polyacrylates and polymethacrylates; polymethyl methacrylates, polyacrylamides and polyacrylonitriles, impact-modified with butyl acrylate.
10. Copolymers of the monomers mentioned under 9) with each other or with other unsaturated monomers, for example acrylonitrile/ butadiene copolymers, acrylonitrile/alkyl acrylate copolymers, acrylonitrile/alkoxyalkyl acrylate or acrylonitrile/vinyl halide copolymers or acrylonitrile/alkyl methacrylate/butadiene terpolymers.
11. Polymers derived from unsaturated alcohols and amines or the acyl derivatives or acetals thereof, for example polyvinyl alcohol, polyvinyl acetate, polyvinyl stearate, polyvinyl benzoate, polyvinyl maleate, polyvinyl butyral, polyallyl phthalate or polyallyl melamine; as well as their copolymers with olefins mentioned in 1) above.
12. Homopolymers and copolymers of cyclic ethers such as polyalkylene glycols, polyethylene oxide, polypropylene oxide or copolymers thereof with bisglycidyl ethers.
13. Polyacetals such as polyoxymethylene and those polyoxymethylenes which contain ethylene oxide as a comonomer; polyacetals modified with thermoplastic polyurethanes, acrylates or MBS.
14. Polyphenylene oxides and sulfides, and mixtures of polyphenylene oxides with styrene polymers or polyamides.
15. Polyurethanes derived from hydroxyl-terminated polyethers, polyesters or polybutadienes on the one hand and aliphatic or aromatic polyisocyanates on the other, as well as precursors thereof.
16. Polyamides and copolyamides derived from diamines and dicarboxylic acids and/or from aminocarboxylic acids or the corresponding lactams, for example polyamide 4, polyamide 6, polyamide 6/6, 6/10, 6/9, 6/12, 4/6, 12/12, polyamide 11, polyamide 12, aromatic polyamides starting from m-xylene diamine and adipic acid; polyamides prepared from hexamethylenediamine and isophthalic or/and terephthalic acid and with or without an elastomer as modifier, for example poly-2,4,4,-trimethylhexamethylene terephthalamide or poly-m-phenylene isophthalamide; and also block copolymers of the aforementioned polyamides with polyolefins, olefin copolymers, ionomers or chemically bonded or grafted elastomers; or with polyethers, e.g. with polyethylene glycol, polypropylene glycol or polytetramethylene glycol; as well as polyamides or copolyamides modified with EPDM or ABS; and polyamides condensed during processing (RIM polyamide systems).
17. Polyureas, polyimides, polyamide-imides and polybenzimidazoles.
18. Polyesters derived from dicarboxylic acids and diols and/or from hydroxycarboxylic acids or the corresponding lactones, for example polyethylene terephthalate, polybutylene terephthalate, poly-1,4-dimethylolcyclohexane terephthalate and polyhydroxybenzoates, as well as block copolyether esters derived from hydroxyl-terminated polyethers; and also polyesters modified with polycarbonates or MBS.
19. Polycarbonates and polyester carbonates.
20. Polysulfones, polyether sulfones and polyether ketones.
21. Crosslinked polymers derived from aldehydes on the one hand and phenols, ureas and melamines on the other hand, such as phenol/formaldehyde resins, urea/formaldehyde resins and melamine/formaldehyde resins.
22. Drying and non-drying alkyd resins.
23. Unsaturated polyester resins derived from copolyesters of saturated and unsaturated dicarboxylic acids with polyhydric alcohols and vinyl compounds as crosslinking agents, and also halogen-containing modifications thereof of low flammability.
24. Crosslinkable acrylic resins derived from substituted acrylates, for example epoxy acrylates, urethane acrylates or polyester acrylates.
25. Alkyd resins, polyester resins and acrylate resins crosslinked with melamine resins, urea resins, polyisocyanates or epoxy resins.
26. Crosslinked epoxy resins derived from polyepoxides, for example from bisglycidyl ethers or from cycloaliphatic diepoxides.
27. Natural polymers such as cellulose, rubber, gelatin and chemically modified homologous derivatives thereof, for example cellulose acetates, cellulose propionates and cellulose butyrates, or the cellulose ethers such as methyl cellulose; as well as rosins and their derivatives.
28. Blends of the aforementioned polymers (polyblends), for example PP/EPDM, Polyamide/EPDM or ABS, PVC/EVA, PVC/ABS, PVC/MBS, PC/ABS, PBTP/ABS, PC/ASA, PC/PBT, PVC/CPE, PVC/acrylates, POM/thermoplastic PUR, PC/thermoplastic PUR, POM/acrylate, POM/MBS, PPO/HIPS, PPO/PA 6.6 and copolymers, PA/HDPE, PA/PP, PA/PPO.
29. Naturally occurring and synthetic organic materials which are pure monomeric compounds or mixtures of such compounds, for example mineral oils, animal and vegetable fats, oil and waxes, or oils, fats and waxes based on synthetic esters (e.g. phthalates, adipates, phosphates or trimellitates) and also mixtures of synthetic esters with mineral oils in any weight ratios, typically those used as spinning compositions, as well as aqueous emulsions of such materials.
30. Aqueous emulsions of natural or synthetic rubber, e.g. natural latex or latices of carboxylated styrene/butadiene copolymers.

Accordingly, the invention also relates to compositions comprising (a) an organic material subjected to oxidative, thermal or light-induced degradation and (b) the alpha, monoclinic crystalline form of 2,2',2"-nitrilo[triethyl-tris-(3,3',5,5'-tetra-tert-butyl-1,1'-biphenyl-2,2'-diyl) phosphite].

Preferably, the organic materials to be protected are natural, semi-synthetic or, preferably, synthetic organic materials. Particular preference is given to thermoplastic polymers, in particular PVC or polyolefins, especially polyethylene and polypropylene.

The action of the compounds according to the invention against thermal and oxidative degradation, especially under thermal stress, such as occurs during processing of thermoplastics, may be mentioned in particular. Accordingly, the compounds according to the invention are highly suitable for use as processing stabilizers.

Preferably, the alpha, monoclinic crystalline form of 2,2',2"-nitrilo[triethyl-tris-(3,3',5,5'-tetra-tert-butyl-1,1'-biphenyl-2,2'-diyl) phosphite] according to the invention is added to the material to be stabilized in amounts of 0.01 to 10%, for example 0.01 to 5%, preferably 0.05 to 3%, in particular 0.05 to 1%, relative to the weight of the organic material to be stabilized.

The compositions according to the invention can contain, in addition to the alpha, monoclinic crystalline form of 2,2',2"-nitrilo[triethyl-tris-(3,3',5,5'-tetra-tert-butyl-1,1'-biphenyl-2,2'-diyl) phosphite], further co-stabilizers, for example the following:

### 1. Antioxidants

1.1. Alkylated monophenols, for example 2,6-di-tert-butyl-4-methylphenol, 2-tert-butyl-4,6-dimethylphenol, 2,6-di-tert-butyl-4-ethylphenol, 2,6-di-tert-butyl-4-n-butylphenol, 2,6-di-tert-butyl-4-isobutylphenol, 2,6-dicyclopentyl-4-methylphenol, 2-(α-methylcyclohexyl)-4,6-dimethylphenol, 2,6-dioctadecyl-4-methylphenol, 2,4,6-tricyclohexylphenol, 2,6-di-tert-butyl-4-methoxymethylphenol, 2,6-di-nonyl-4-methylphenol, 2,4-dimethyl-6-(1'-methylundec-1'-yl)phenol, 2,4-dimethyl-6-(1'-methylheptadec-1'-yl)phenol, 2,4-dimethyl-6-(1'-methyltridec-1'-yl)phenol and mixtures thereof.

1.2. Alkylthiomethylphenols, for example 2,4-dioctylthiomethyl-6-tert-butylphenol, 2,4-dioctylthiomethyl-6-methylphenol, 2,4-dioctylthiomethyl-6-ethylphenol, 2,6-di-dodecylthiomethyl-4-nonylphenol.

1.3. Hydroquinones and alkylated hydroquinones, for example 2,6-di-tert-butyl-4-methoxyphenol, 2,5-di-tert-butylhydroquinone, 2,5-di-tert-amylhydroquinone, 2,6-diphenyl-4-octadecyloxyphenol, 2,6-di-tert-butylhydroquinone, 2,5-di-tert-butyl-4-hydroxyanisole, 3,5-di-tert-butyl-4-hydroxyanisole, 3,5-di-tert-butyl-4-hydroxyphenyl stearate, bis-(3,5-di-tert-butyl-4-hydroxyphenyl) adipate.

1.4. Hydroxylated thiodiphenyl ethers, for example 2,2'-thiobis(6-tert-butyl-4-methylphenol), 2,2'-thiobis(4-octylphenol), 4,4'-thiobis(6-tert-butyl-3-methylphenol), 4,4'-thio-bis(6-tert-butyl-2-methylphenol), 4,4'-thiotis-(3,6-di-sec-amylphenol), 4,4'-bis-(2,6-dimethyl-4-hydroxyphenyl) disulfide.

1.5. Alkylidenebisphenols, for example 2,2'-methylenebis(6-tert-butyl-4-methylphenol), 2,2'-methylenebis(6-tert-butyl-4-ethylphenol), 2,2'-methylenebis[4-methyl-6-(a-methylcyclohexyl)phenol], 2,2'-methylenebis(4-methyl-6-cyclohexylphenol), 2,2'-methylenebis(6-nonyl-4-methylphenol),2,2'-methylenebis(4,6-di-tert-butylphenol), 2,2'-ethylidenebis(4,6-di-tert-butylphenol), 2,2'-ethylidenebis(6-tert-butyl-4-isobutylphenol), 2,2'-methylenebis[6-(α-methylbenzyl)-4-nonylphenol], 2,2'-methylenebis[6-(α,α-dimethylbenzyl) 4-nonylphenol], 4,4'-methylenebis(2,6-di-tert-butylphenol), 4,4'-methylenebis(6-tert-butyl-2-methylphenol), 1,1-bis(5-tert-butyl-4-hydroxy-2-methylphenyl)butane, 2,6-bis(3-tert-butyl-5-methyl-2-hydroxybenzyl)-4-methylphenol, 1,1,3-tris(5-tert-butyl-4-hydroxy-2-methylphenyl)butane, 1,1-bis(5-tert-butyl-4-hydroxy-2-methyl-phenyl)-3-n-dodecylmercaptobutane, ethylene glycol bis[3,3-bis(3'-tert-butyl-4'-hydroxyphenyl)butyrate], bis(3-tert-butyl-4-hydroxy-5-methyl-phenyl)dicyclopentadiene, bis[2-(3'-tert-butyl-2'-hydroxy-5'-methylbenzyl)6-tert-butyl-4-methylphenyl]terephthalate, 1,1-bis-(3,5-dimethyl-2-hydroxyphenyl)butane, 2,2-bis-(3,5-di-tert-butyl-4-hydroxyphenyl)propane, 2,2-bis-(5-tert-butyl-4-hydroxy2-methylphenyl)-4-n-dodecylmercaptobutane, 1,1,5,5-tetra-(5-tert-butyl-4-hydroxy2-methylphenyl)pentane.

1.6. O-, N- and S-benzyl compounds, for example 3,5,3',5'-tetra-tert-butyl-4,4'-dihydroxydibenzyl ether, octadecyl-4-hydroxy-3,5-dimethylbenzylmercaptoacetate, tris-(3,5-di-tert-butyl-4-hydroxybenzyl)amine, bis(4-tert-butyl-3-hydroxy-2,6-dimethylbenzyl)dithioterephthalate, bis(3,5-di-tert-butyl-4-hydroxybenzyl)sulfide, isooctyl-3,5di-tert-butyl-4-hydroxybenzylmercaptoacetate.

1.7. Hydroxybenzylated malonates, for example dioctadecyl-2,2-bis-(3,5-di-tert-butyl-2-hydroxybenzyl)-malonate, di-octadecyl-2-(3-tert-butyl-4-hydroxy-5-methylbenzyl)-malonate, di-dodecylmercaptoethyl-2,2-bis-(3,5-di-tert-butyl-4-hydroxybenzyl)malonate, bis-[4-(1,1,3,3-tetramethylbutyl)phenyl]-2,2-bis(3,5-di-tert-butyl-4-hydroxybenzyl)malonate.

1.8. Aromatic hydroxybenzyl compounds, for example 1,3,5-tris-(3,5-di-tert-butyl-4-hydroxybenzyl)-2,4,6-trimethylbenzene, 1,4-bis(3,5-di-tert-butyl-4-hydroxybenzyl)-2,3,5,6-tetramethylbenzene, 2,4,6-tris(3,5-di-tert-butyl-4-hydroxybenzyl)phenol.

1.9. Triazine Compounds, for example 2,4-bis(octylmercapto)-6-(3,5-di-tert-butyl-4-hydroxyanilino)-1,3,5-triazine, 2-octylmercapto-4,6-bis(3,5-di-tert-butyl-4-hydroxyanilino)-1,3,5-triazine, 2-octylmercapto-4,6-bis(3,5-di-tert-butyl-4-hydroxyphenoxy)-1,3,5-triazine, 2,4,6-tris(3,5-di-tert-butyl-4-hydroxyphenoxy)-1,2,3-triazine, 1,3,5-tris-(3,5-di-tert-butyl-4-hydroxybenzyl)isocyanurate, 1,3,5-tris(4-tert-butyl-3-hydroxy-2,6-dimethylbenzyl)isocyanurate, 2,4,6-tris(3,5-di-tert-butyl-4-hydroxyphenylethyl)-1,3,5-triazine, 1,3,5-tris(3,5-di-tert-butyl-4-hydroxyphenylpropionyl)-hexahydro-1,3,5-tdazine, 1,3,5-tris(3,5-dicyclohexyl-4-hydroxybenzyl)isocyanurate.

1.10. Benzylphosphonates, for example dimethyl-2,5-di-tert-butyl-4-hydroxybenzylphosphonate, diethyl-3,5-di-tert-butyl-4-hydroxybenzylphosphonate, dioctadecyl3,5-di-tert-butyl-4-hydroxybenzylphosphonate, dioctadecyl-5-tert-butyl-4-hydroxy3-methylbenzylphosphonate, the calcium salt of the monoethyl ester of 3,5-di-tert-butyl-4-hydroxybenzylphosphonic acid.

1.11. Acylaminophenols, for example 4-hydroxylauranilide, 4-hydroxystearanilide, octyl N-(3,5-di-tert-butyl-4-hydroxyphenyl)carbamate.

1.12. Esters of β-(3,5-di-tert-butyl-4-hydroxyphenyl)propionic acid with mono- or polyhydric alcohols, e.g. with methanol, ethanol, octadecanol, 1,6-hexanediol, 1,9-nonanediol, ethylene glycol, 1,2-propanediol, neopentyl glycol, thiodiethylene glycol diethylene glycol, triethylene glycol, pentaerythritol, tris(hydroxyethyl) isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.

1.13. Esters of β-(5-tert-butyl-4-hydroxy-3-methylphenyl)propionic acid with mono- or polyhydric alcohols, e.g. with methanol, ethanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl) isocyanurate, N,N'-bis-(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.

1.14 Esters of β-(3,5-dicyclohexyl-4-hydroxyphenyl)propionic acid with mono- or polyhydric alcohols, e.g. with methanol, ethanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl) isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.

1.15 Esters of 3,5-di-tert-butyl-4-hydroxyphenyl acetic acid with mono- or polyhydric alcohols, e.g. with methanol, ethanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl) isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.

1.16. Amides of β-(3,5-di-tert-butyl-4-hydroxyphenyl)propionic acid e.g. N,N'-bis(3,5-di-tert-butyl-4-hydroxyphenylpropionyl)hexamethylenediamine, N,N'-bis(3,5-di-tert-butyl-4-hydroxyphenylpropionyl)trimethylenediamine, N,N'-bis(3,5-di-tert-butyl-4-hydroxyphenylpropionyl)hydrazine.

### 2. UV absorbers and light stabilisers

2.1. 2-(2'-Hydroxyphenyl)benzotriazoles, for example 2-(2'-hydroxy-5'-methylphenyl)-benzotriazole, 2-(3',5'-di-tert-butyl-2'-hydroxyphenyl)benzotriazole, 2-(5'-tert-butyl-2'-hydroxyphenyl)benzotriazole, 2-(2'-hydroxy-5'-(1,1,3,3-tetramethylbutyl)phenyl)benzotriazole, 2-(3',5'-di-tert-butyl-2'-hydroxyphenyl)-5-chloro-benzotriazole, 2-(3'-tert-butyl2'-hydroxy-5'-methylphenyl)-5-chloro-benzotriazole, 2-(3'-sec-butyl-5'-tert-butyl-2'-hydroxyphenyl)benzotriazole, 2-(2'-hydroxy-4'-octyloxyphenyl)benzotriazole, 2-(3',5'-di-tert-amyl-2'-hydroxyphenyl)benzotriazole, 2-(3',5'-bis-(α,α-dimethylbenzyl)-2'-hydroxyphenyl)benzotriazole, mixture of 2-(3'-tert-butyl-2'-hydroxy-5'-(2-octyloxycarbonylethyl)phenyl)5-chloro-benzotriazole, 2-(3'-tert-butyl-5'-[2-(2-ethylhexyloxy)-carbonylethyl]-2'-hydroxyphenyl)-5-chloro-benzotriazole, 2-(3'-tert-butyl-2'-hydroxy-5'-(2-methoxycarbonylethyl)phenyl)-5-chloro-benzotriazole, 2-(3'-tert-butyl-2'-hydroxy-5'-(2-methoxycarbonylethyl)phenyl)benzotriazole, 2-(3'-tert-butyl-2'-hydroxy-5'-(2-octyloxycarbonylethyl)phenyl)benzotriazole, 2-(3'-tert-butyl-5'-[2-(2-ethylhexyloxy)carbonylethyl]-2'-hydroxyphenyl)benzotriazole, 2-(3'-dodecyl-2'-hydroxy-5'-methylphenyl)benzotriazole, and 2-(3'-tert-butyl-2'-hydroxy-5'-(2-isooctyloxycarbonylethyl)phenylbenzotriazole, 2,2'-methylene-bis[4-(1,1,3,3-tetramethylbutyl)-6-benzotriazole-2-ylphenol]; the transesterification product of 2-[3'-tert-butyl-5'-(2-methoxycarbonylethyl)-2'-hydroxyphenyl]-2H-benzotriazole with polyethylene glycol 300; 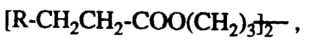 where R = 3'-tert-butyl-4'-hydroxy-5'-2H-benzotriazol-2-ylphenyl.

2.2. 2-Hydroxybenzophenones, for example the 4-hydroxy, 4-methoxy, 4-octyloxy, 4-decyloxy, 4-dodecyloxy, 4-benzyloxy, 4,2',4'-trihydroxy and 2'-hydroxy-4,4'-dimethoxy derivatives.

2.3. Esters of substituted and unsubstituted benzoic acids, as for example 4-tertbutylphenyl salicylate, phenyl salicylate, octylphenyl salicylate, dibenzoyl resorcinol, bis(4-tert-butylbenzoyl) resorcinol, benzoyl resorcinol, 2,4-di-tertbutylphenyl 3,5-di-tert-butyl-4-hydroxybenzoate, hexadecyl 3,5-di-tert-butyl-4-hydroxybenzoate, octadecyl 3,5-di-tert-butyl-4-hydroxybenzoate, 2-methyl-4,6-di-tert-butylphenyl 3,5-di-tert-butyl-4-hydroxybenzoate.

2.4. Acrylates, for example ethyl α-cyano-β,β-diphenylacrylate, isooctyl α-cyano-β,β-diphenylacrylate, methyl α-carbomethoxycinnamate, methyl α-cyano-β-methyl-p-methoxycinnamate, butyl α-cyano-β-methyl-p-methoxycinnamate, methyl α-carbomethoxy-p-methoxycinnamate and N-(β-carbomethoxy-β-cyanovinyl)2-methylindoline.

2.5. Nickel compounds, for example nickel complexes of 2,2'-thio-bis-[4-(1,1,3,3-tetra-methylbutyl)phenol], such as the 1:1 or 1:2 complex, with or without additional ligands such as n-butylamine, triethanolamine or N-cyclohexyldiethanolamine, nickel dibutyldithiocarbamate, nickel salts of the monoalkyl esters, e.g. the methyl or ethyl ester, of 4-hydroxy-3,5-di-tert-butylbenzylphosphonic acid, nickel complexes of ketoximes, e.g. of 2-hydroxy-4-methylphenyl undecylketoxime, nickel complexes of 1-phenyl-4-lauroyl-5-hydroxypyrazole, with or without additional ligands.

2.6. Sterically hindered amines, for example bis(2,2,6,6-tetramethyl-piperidyl)sebacate, bis(2,2,6,6-tetramethyl-piperidyl)succinate, bis(1,2,2,6,6-pentamethylpiperidyl)sebacate, bis(1,2,2,6,6-pentamethylpiperidyl) n-butyl-3,5-di-tert-butyl-4-hydroxybenzylmalonate, the condensate of 1-(2-hydroxyethyl)-2,2,6,6-tetramethyl-4-hydroxypiperidine and succinic acid, the condensate of N,N'-bis(2,2,6,6-tetramethyl-4-piperidyl)hexamethylenediamine and 4-tert-octylamino-2,6-dichloro-1,3,5-triazine, tris(2,2,6,6-tetramethyl-4-piperidyl) nitrilotriacetate, tetrakis(2,2,6,6-tetramethyl-4-piperidyl)-1,2,3,4-butane-tetracarboxylate, 1,1'-(1,2-ethanediyl)bis(3,3,5,5-tetramethylpiperazinone), 4-benzoyl-2,2,6,6-tetramethylpiperidine, 4-stearyloxy-2,2,6,6-tetramethylpiperidine, bis(1,2,2,6,6-pentamethylpiperidyl)-2-n-butyl-2-(2-hydroxy-3,5-di-tert-butylbenzyl)malonate, 3-n-octyl-7,7,9,9-tetramethyl-1,3,8-triazasprio[4.5]decan-2,4-dion, bis(1-octyloxy-2,2,6,6-tetramethylpiperidyl)sebacate, bis(1-octyloxy-2,2,6,6-tetramethylpiperidyl)succinate, the condensate of N,N'-bis-(2,2,6,6-tetramethyl-4-piperidyl)hexamethylenediamine and 4-morpholino-2,6-dichloro-1,3,5-triazine, the condensate of 2-chloro-4,6-bis(4-n-butylamino-2,2,6,6-tetramethylpiperidyl)-1,3,5-triazine and 1,2-bis(3-aminopropylamino)-ethane, the condensate of 2-chloro-4,6-di-(4-n-butylamino-1,2,2,6,6-pentamethylpiperidyl)-1,3,5-triazine and 1,2-bis-(3-aminopropylamino)ethane, 8-acetyl-3-dodecyl-7,7,9,9-tetramethyl-1,3,8-triazaspiro[4.5]decane-2,4-dione, 3-dodecyl-1-(2,2,6,6-tetramethyl-4-piperidyl)pyrrolidin-2,5-dione, 3-dodecyl-1-(1,2,2,6,6-pentamethyl-4-piperidyl)pyrrolidine-2,5-dione.

2.7. Oxamides, for example 4,4'-dioctyloxyoxanilide, 2,2'-dioctyloxy-5,5'-di-tert-butoxanilide, 2,2'-didodecyloxy-5,5'-di-tert-butoxanilide, 2-ethoxy-2'-ethoxanilide, N,N'-bis(3-dimethylaminopropyl)oxamide,. 2-ethoxy-5-tert-butyl-2'-ethoxanilide and its mixture with 2-ethoxy-2'-ethyl-5,4'-di-tert-butoxanilide and mixtures of ortho- and paramethoxy-disubstituted oxanilides and mixtures of o- and p-ethoxy-disubstituted oxanilides.

2.8. 2-(2-Hydroxyphenyl)-1,3,5-triazines, for example 2,4,6-tris(2-hydroxy-4-octyloxyphenyl)-1,3,5-triazine, 2-(2-hydroxy-4-octyloxyphenyl)-4,6-bis(2,4-dimethylphenyl)1,3,5-triazine, 2-(2,4-dihydroxyphenyl)-4,6-bis(2,4-dimethylphenyl)-1,3,5-triazine, 2,4-bis(2-hydroxy-4-propyloxyphenyl)-6-(2,4-dimethylphenyl)-1,3,5-triazine, 2-(2-hydroxy-4-octyloxyphenyl)-4,6-bis(4-methylphenyl)-1,3,5-triazine, 2-(2-hydroxy-4-dodecyloxyphenyl)-4,6-bis(2,4-dimethylphenyl)-1,3,5-triazine, 2-[2-hydroxy-4-(2hydroxy-3-butyloxy-propoxy)phenyl]-4,6-bis(2,4-dimethyl)-1,3,5-triazine, 2-[2-hydroxy-4-(2-hydroxy-3-octyloxy-propyloxy)phenyl]-4,6-bis(2,4-dimethyl)-1,3,5-triazine.

3. Metal deactivators, for example N,N'-diphenyloxamide, N-salicylal-N'-salicyloyl hydrazine, N,N'-bis(salicyloyl) hydrazine, N,N'-bis(3,5-di-tert-butyl-4-hydroxyphenylpropionyl)hydrazine, 3-salicyloylamino-1,2,4-triazole, bis(benzylidene)oxalyl dihydrazide, oxanilide, isophthaloyl dihydrazide, sebacoyl bisphenylhydrazide, N,N'-diacetyladipoyl dihydrazide, N,N'-bis(salicyloyl)oxalyl dihydrazide, N,N'-bis(salicyloyl)thiopropionyl dihydrazide.

4. Phosphites and phosphonites, for example triphenyl phosphite, diphenyl alkyl phosphites, phenyl dialkyl phosphites, tris(nonylphenyl) phosphite, trilauryl phosphite, trioctadecyl phosphite, distearyl pentaerythritol diphosphite, tris(2,4-di-tert-butylphenyl) phosphite, diisodecyl pentaerythritol diphosphite, bis(2,4-di-tert-butylphenyl) pentaerythritol diphosphite, bis(2,6-di-tert-butyl-4-methylphenyl)-pentaeryt hritol diphosphite, diisodecyloxypentaerythritol diphosphite, bis(2,4-di-tert-butyl-6-methylphenyl)pentaerythritol diphosphite, bis(2,4,6-tris(tert-butylphenyl)pentaerythritol diphsophite, tristearyl sorbitol triphosphite, tetrakis(2,4-di-tert-butylphenyl) 4,4'-biphenylene diphosphonite, 6-isooctyloxy-2,4,8,10-tetra-tert-butyl-12H-dibenz[d,g]-1,3,2-dioxaphosphocin, 6-fluoro-2,4,8,10-tetra-tert-butyl-12-methyl-dibenz[d,g]-1,3,2-dioxaphosphocin, bis(2,4-di-tert-butyl-6-methylphenyl)methylphosphite, bis(2,4-di-tert-butyl-6-methylphenyl)ethylphosphite.

5. Peroxide scavengers, for example esters of β-thiodipropionic acid, for example the lauryl, stearyl, myristyl or tridecyl esters, mercaptobenzimidazole or the zinc salt of 2-mercaptobenzimidazole, zinc dibutyldithiocarbamate, dioctadecyl disulfide, pentaerythritol tetrakis(β-dodecylmercapto)propionate.

6. Polyamide stabilisers, for example, copper salts in combination with iodides and/or phosphorus compounds and salts of divalent manganese.

7. Basic co-stabilisers, for example, melamine, polyvinylpyrrolidone, dicyandiamide, triallyl cyanurate, urea derivatives, hydrazine derivatives, amines, polyamides, polyurethanes, alkali metal salts and alkaline earth metal salts of higher fatty acids for example calcium stearate, zinc stearate, magnesium behenate, magnesium stearate, sodium ricinoleate and potassium palmitate, antimony pyrocatecholate or tin pyrocatecholate.

8. Nucleating agents, for example, 4-tert-butylbenzoic acid, adipic acid, diphenylacetic acid.

9. Fillers and reinforcing agents, for example, calcium carbonate, silicates, glass fibres, asbestos, talc, kaolin, mica, barium sulfate, metal oxides and hydroxides, carbon black, graphite.

10. Other additives, for example, plasticisers, lubricants, emulsifiers, pigments, optical brighteners, flameproofing agents, antistatic agents and blowing agents.

11. Benzofuranones and indolinones, for example those disclosed in US-A-4 325 863, US-A-4 338 244 or US-A-5 175 312, or 3-[4-(2-acetoxyethoxy)phenyl]-5,7-di-tert-butylbenzofuran-2-one, 5,7-di-tert-butyl-3-[4-(2-stearoyloxyethoxy)phenyl]benzofuran-2-one, 3,3'-bis[5,7-di-tert-butyl-3-(4-[2-hydroxyethoxy]phenyl)benzofuran-2-one], 5,7-di-tert-butyl-3-(4-ethoxyphenyl)benzofuran-2-one, 3-(4-acetoxy-3,5-dimethylphenyl)-5,7-di-tert-butyl-benzofuran-2-one, 3-(3,5-dimethyl-4-pivaloyloxyphenyl)-5,7-di-tert-butyl-benzofuran-2-one.

The co-stabilizers, with the exception of the benzofuranones listed under 11, are added for example in concentrations of 0.01 to 10%, relative to the total weight of the material to be stabilized.

Further preferred compositions comprise, in addition to components (a) and (b) further additives, in particular phenolic antioxidants, light stabilizers or processing stabilizers.

Particularly preferred additives are phenolic antioxidants (item 1 of the list), sterically hindered amines (item 2.6 of the list), phosphites and phosphonites (item 4 of the list) and peroxide-destroying compounds (item 5.) of the list.

Additional additives (stabilizers) which are also particularly preferred are benzofuran-2-ones, such as described, for example, in US-A-4 325 863, US-A-4 338 244 or US-A-5 175 312.

Examples of such benzofuran-2-ones are compounds of the formula 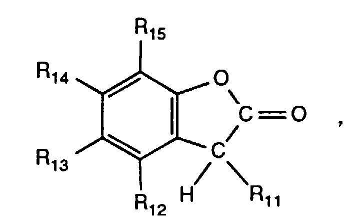 in which
R₁₁ is phenyl or phenyl which is substituted by 1 to 3 alkyl radicals together having at most 18 carbon atoms, alkoxy having 1 to 12 carbon atoms, alkoxycarbonyl having 2 to 18 carbon atoms or chlorine;
R₁₂ is hydrogen;
R₁₄ is hydrogen, alkyl having 1 to 12 carbon atoms, cyclopentyl, cyclohexyl or chlorine;
R₁₃ has the meaning of R₁₂ or R₁₄ or is a radical of the formula 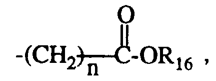 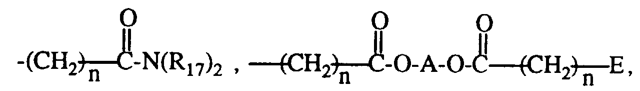 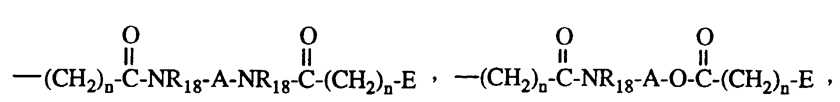 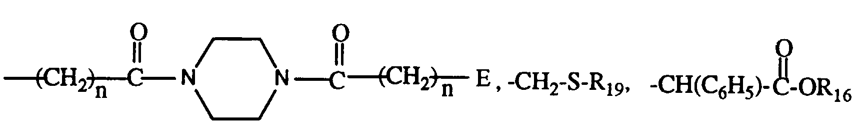 or -D-E,
   in which
R₁₆ is hydrogen, alkyl having 1 to 18 carbon atoms, alkyl having 2 to 18 carbon atoms which is interrupted by oxygen or sulfur, dialkylaminoalkyl having a total of 3 to 16 carbon atoms, cyclopentyl, cyclohexyl, phenyl or phenyl which is substituted by 1 to 3 alkyl radicals together having at most 18 carbon atoms;
n is 0, 1 or 2;
the substituents R₁₇, independently of one another, are hydrogen, alkyl having 1 to 18 carbon atoms, cyclopentyl, cyclohexyl, phenyl, phenyl which is substituted by 1 or 2 alkyl radicals together having at most 16 carbon atoms, a radical of the formula -C₂H₄OH, -C₂H₄-O-CₘH₂ₘ₊₁ or 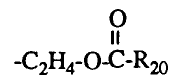 or together with the nitrogen atom to which they are attached form a piperidine or morpholine radical;
m is 1 to 18;
R₂₀ is hydrogen, alkyl having 1 to 22 carbon atoms or cycloalkyl having 5 to 12 carbon atoms;
A is alkylene having 2 to 22 carbon atoms which may be interrupted by nitrogen, oxygen or sulfur;
R₁₈ is hydrogen, alkyl having 1 to 18 carbon atoms, cyclopentyl, cyclohexyl, phenyl, phenyl which is substituted by 1 or 2 alkyl radicals together having at most 16 carbon atoms, or is benzyl;
R₁₉ is alkyl having 1 to 18 carbon atoms;
D is -O-, -S-, -SO-, -SO₂- or -C(R₂₁)₂- ;
the substituents R₂₁, independently of one another, are hydrogen, C₁-C₁₆alkyl, the two R₂₁ together containing 1 to 16 carbon atoms, R₂₁ is furthermore phenyl or a radical of the formula 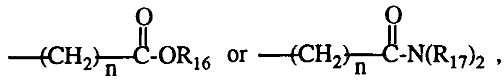 in which n, R₁₆ and R₁₇ are as defined above;
E is a radical of the formula 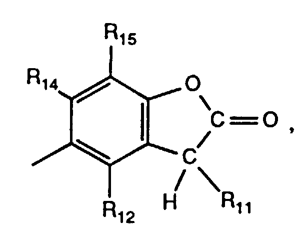 in which R₁₁, R₁₂ and R₁₄ are as defined above; and
R₁₅ is hydrogen, alkyl having 1 to 20 carbon atoms, cyclopentyl, cyclohexyl, chlorine or a radical of the formula 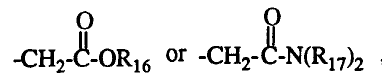 in which R₁₆ and R₁₇ are as defined above, or R₁₅ together with R₁₄ forms a tetramethylene radical.

Preference is given to those benzofuran-2-ones in which R₁₃ is hydrogen, alkyl having 1 to 12 carbon atoms, cyclopentyl, cyclohexyl, chlorine or a radical of the formula 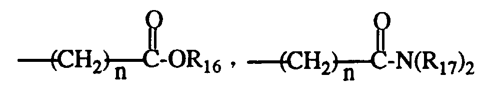 or -D-E, in which n, R₁₆, R₁₇, D and E are as defined above, R₁₆ is in particular hydrogen, alkyl having 1 to 18 carbon atoms, cyclopentyl or cyclohexyl.

Preference is given furthermore to those benzofuran-2-ones in which R₁₁ is phenyl or phenyl which is substituted by 1 or 2 alkyl radicals together having at most 12 carbon atoms; R₁₂ is hydrogen; R₁₄ is hydrogen or alkyl having 1 to 12 carbon atoms; R₁₃ is hydrogen, alkyl having 1 to 12 carbon atoms, 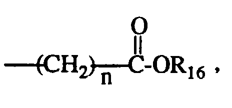 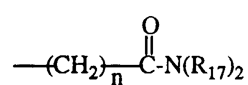 or -D-E; R₁₅ is hydrogen, alkyl having 1 to 20 carbon atoms, 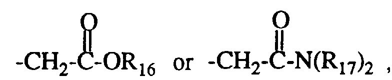 or R₁₅ together with R₁₄ forms a tetramethylene radical, n, R₁₆, R₁₇, D and E being as defined at the beginning.

Of particular interest are also those benzofuran-2-ones in which R₁₁ is phenyl; R₁₃ is hydrogen, alkyl having 1 to 12 carbon atoms or -D-E; R₁₂ and R₁₄, independently of one another, are hydrogen or alkyl having 1 to 4 carbon atoms; and R₁₅ is alkyl having 1 to 20 carbon atoms, D and E being as defined at the beginning.

Of special interest are finally also those benzofuran-2-ones in which R₁₁ is phenyl; R₁₃ is alkyl having 1 to 4 carbon atoms or -D-E; R₁₂ and R₁₄ are hydrogen; and R₁₅ is alkyl having 1 to 4 carbon atoms, cyclopentyl or cyclohexyl, D being a group -C(R₂₁)₂- and E being a radical of the formula 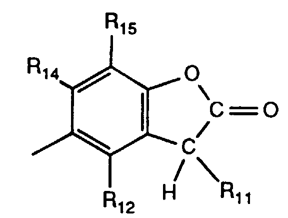 the substituents R₂₁ being identical to or different from one another and each being alkyl having 1 to 4 carbon atoms, and R₁₁, R₁₂, R₁₄ and R₁₅ being as defined.

The amount of additional additives, in particular stabilizers, for example of the benzofuran-2-ones mentioned, can vary within wide limits. For example, 0.0005 to 10, preferably 0.001 to 5, in particular 0.01 to 2, % by weight thereof can be present in the compositions according to the invention.

Incorporation of the alpha, monoclinic crystalline form of 2,2',2"-nitrilo[triethyl-tris-(3,3',5,5'-tetra-tert-butyl-1,1'-biphenyl-2,2'-diyl) phosphite] and, if desired, further additives in the polymer organic material is carried out by known methods, for example before or during moulding or by applying the dissolved or dispersed compounds to the polymer organic material, if appropriate with subsequent slow evaporation of the solvent. The alpha, monoclinic crystalline form according to the invention can also be added to the materials to be stabilized in the form of a masterbatch containing them, for example, in a concentration of 2.5 to 25% by weight.

The alpha, monoclinic crystalline modification according to the invention can also be added before or during polymerization or before crosslinking.

The alpha, monoclinic crystalline modification according to the invention can be incorporated in the material to be stabilized in pure form or encapsulated in waxes, oils or polymers.

The alpha, monoclinic crystalline modification according to the invention can also be sprayed onto the polymer to be stabilized. They are capable of diluting other additives (for example the abovementioned customary additives) or their melts, thus enabling them to be sprayed onto the polymer to be stabilized also together with these additives. Addition by spraying during deactivation of the polymerization catalysts is particularly advantageous, it being possible, for example, for the steam used for deactivation to be used for spraying.

In the case of bead polymerized polyolefins, it may be advantageous, for example, to apply the alpha, monoclinic crystalline modification according to the invention, if desired together with other additives, by spraying.

The materials thus stabilized can be used in a wide range of forms, for example as films, fibres, tapes, moulding compositions, profiles or as binders for paints, adhesives or cements.

As already mentioned, the organic materials to be protected are preferably organic, in particular synthetic, polymers. Of these, the materials being protected are particularly advantageously thermoplastic materials, in particular polyolefins. The excellent efficiency of the alpha, monoclinic crystalline form of 2,2',2"-nitrilo[triethyl-tris-(3,3',5,5'-tetra-tert-butyl1,1'-biphenyl-2,2'-diyl) phosphite] as processing stabilizer (thermal stabilizer) should be mentioned in particular. To this end, it is advantageously added to the polymer before or during its processing. It is however also possible to stabilize other polymers (for example elastomers) or lubricants or hydraulic fluids against degradation, for example light-induced or thermal-oxidative degradation. For elastomers, see the above list of possible organic materials.

Suitable lubricants and hydraulic fluids are based, for example, on mineral or synthetic oils or mixtures thereof. Lubricants are known to one skilled in the art and described in the relevant technical literature, for example in Dieter Klamann, "Schmierstoffe und verwandte Produkte" (Verlag Chemie, Weinheim 1982), in Schewe-Kobek, "Das Schmiermittel-Taschenbuch" (Dr. Alfred Hüthig-Verlag, Heidelberg, 1974) and in "Ullmanns Enzyklopädie der technischen Chemie" vol. 13, pages 85-94 (Verlag Chemie, Weinheim, 1977).

Accordingly, a preferred embodiment of the present invention is the use of the alpha, monoclinic crystalline form of 2,2',2"-nitrilo[triethyl-tris-(3,3',5,5'-tetra-tert-butyl-1,1'-biphenyl-2,2'-diyl) phosphite] for stabilizing organic materials against oxidative, thermal or light-induced degradation.

The alpha, monoclinic crystalline modification according to the invention is preferably used as processing stabilizer (thermal stabilizer) of thermoplastic polymers.

The present invention also provides a process for stabilizing an organic material against oxidative, thermal or light-induced degradation, which comprises incorporating therein or applying thereto the alpha, monoclinic crystalline form of 2,2',2"-nitrilo[triethyl-tris-(3,3',5,5'-tetra-tert-butyl-1,1'-biphenyl-2,2'-diyl)phosphite].

Differential scanning calorimetry (DSC) measurements are obtained on a TA Instrument Inc., 910 differential scanning calorimeter, with a 100 ml/min nitrogen purge, aligned aluminum pan, temperature scan at 5°C/min to 230°C.

X-ray diffraction patterns are recorded on a Philips Norelco X-ray Diffractometer unit, using Cu-Kα radiation with a nickel filter.

The examples which follow further illustrate the invention. The parts or percentages given are by weight.

### Example 1:

The compound of formula I, 2,2',2"-nitrilo[triethyl-tris-(3,3',5,5'-tetra-tert-butyl-1,1'-biphenyl-2,2'-diyl) phosphite], is prepared according to procedure of Example 4 of U.S. Patent No. 4,318,845. The product obtained is recrystallized from the following solvent systems to obtain the novel alpha, crystalline modification of the instant invention. The results are summarized in Table 2.

**Table 2:**

| Solvent (wt/wt) | Compound/Solvent Ratio (weight/weight) | Melting Point^{a)} (°C) | Yield (%) |
|---|---|---|---|
| ethyl acetate | 1/3.8 | 160 | 74 |
| toluene isopropanol (1/6) | 1/7 | 158 | 75 |
| xylene / isopropanol (1/1) | 1.2/1 | 159 | 91 |
| xylene/methanol (1.8 / 1) | 1.5/1 | 159 | 97 |
| toluene / methanol (1/1) | 1/2 | 159 | 91 |
| toluene / methanol (1.1/1) | 1/8.3 | 159 | 50 |
| diethyl ether | 1/3.5 | 165 | 25 |
| isopropanol/dichloromethane (1.2 / 1) | 1/7.25 | 161 | 38 |
| xylene/1-propanol (1/1) | 1.2/1 | 163 | 93 |

a) Melting point is determined by differential scanning calorimetry and the peak temperature in the endotherm is recorded as the melting point

Suitable crystals for X-ray analysis are grown from ethyl acetate. For the structure determination, a thick hexagonal plate is selected and broken to reduce the largest dimension to less than 1 mm. Intensity data are measured on a Siemens R3MV four circle diffractometer as described in Table 3 below. The structure is solved by direct methods using Siemens SHELXTL PLUS (VMS). Full-matrix least-square refinements are carried out. The relative absolute configuration is determined to be R*, R*, R*.

**Table 3**

| Crystal and Data Collection Parameters | |
|---|---|
| Formula | C₉₀H₁₃₂NO₉P₃ |
| Formula weight (g·mol⁻¹) | 1464.96 |
| Color; Habit | Colorless Hexagonal Prism |
| Crystal System | Monoclinic |
| Space group | P2₁/n |
| Z | 4 |
| Cell parameters | a = 20.0700 (10) Å |
| | b = 17.477 (2) Å |
| | c = 27.620 (3) Å |
| | β = 93.050 (10) deg |
| Volume | ν = 9674.5 (14) Å³ |
| d_{calc} | 1.006 |
| Absorption Coefficient | 0.926 mm⁻¹ |
| Crystal Size | 0.3 x 0.3 x 0.6 mm |
| F(000) | 3184 |
| Temperature | 23° C |
| Diffractometer Type | Siemens R3m/V |
| Radiation | CuKα (λ = 1.54178 Å) |
| Monochromator | Orientated graphite crystal |
| 20 Range | 3.15 to 115.0 deg |
| Scan Type | 2Θ-Θ |
| Scan Range (w) | 0.50° plus Kα separation |
| Reflections Collected | 14042 |
| No. of observed reflections | 9094 (F > 3.0 σ (F)) |
| R | 0.1159 |
| R_{w} | 0.1690 |

### Example 2: Flowability Properties

This example illustrates the superior flowability properties of the new alpha crystalline modification of the compound of formula I prepared in Example 1 as compared to the flow properties of the compound of formula I as prepared according to the procedure of Example 4 of US-A-4 318 845.

The angle of repose is measured according to the procedure reported by G. Gold et al. in J. Pharm. Sci., 55, 1291 (1966). A smaller angle of repose indicated a superior flowing solid product. The results are summarized in Table 4.

**Table 4:**

| Compound | Angle of Repose (degrees) |
|---|---|
| Polypropylene (control) | 38 |
| Example 1 (alpha crystalline form) | 38 |
| Example 4 of US-A-4 318 845 | 43 |

### Example 3: Process Stabilization of Polypropylene at 274°C.

The base formulation comprises unstabilized, high yield/high selectivity catalyzed polypropylene (PROFAX® 6501, Batch No. BD07155, produced by Himont) containing 0.075% by weight of calcium stearate. The test additives are incorporated into the polypropylene by dry blending or, when the additive is a liquid, using a minimum amount of methylene chloride solvent. The solvent is then removed by evaporation under reduced pressure. The stabilized resin formulation is extruded at 90 rpm from a 2.54 cm diameter extruder at 274°C with a residence time of 90 seconds. After each of the first, third and fifth extrusions, the melt flow rate (in grams/10 minutes) is determined by ASTM method D1238 on the pellets obtained from the extruder. The melt flow rate is a measure of the molecular weight of the polymer and indicates whether thermal degradation is occurring during melt processing by extrusion. A minimum change in melt flow rate is favored and indicates good melt processing stabilization. A substantial increase in the melt flow denotes pronounced chain degradation, i.e. poor stabilization.The results are given in Table 5 below.

**Table 5:**

| Additive | Concentration (% by weight) | Melt Flow after Extrusion | | |
|---|---|---|---|---|
| | | 1st | 3rd | 5th |
| Calcium stearate | 0.075 | 13.5 | 24.0 | 45.2 |
| Calcium stearate plus | 0.075 | 8.1 | 12.9 | 17.5 |
| AO A | 0.075 | | | |
| Calcium stearate plus | 0.075 | 5.6 | 6.8 | 7.4 |
| AOA plus | 0.075 | | | |
| Compound of Example 1 (alpha crystalline form) | 0.075 | | | |

AO A is neopentanetetrayl tetrakis(3,5-di-tert-butyl-4-hydroxyhydrocinnamate).

Example 4: Comparison of the X-ray diffraction data of the alpha, monoclinic crystalline form of formula I according to the invention (compound A) and the compound of formula I as prepared according to the procedure of Example 4 of US-A-4 318 845 (compound B).

The alpha, monoclinic crystalline form of 2,2',2"-nitrilo[triethyl-tris-(3,3',5,5'-tetra-tert-butyl-1,1'-biphenyl-2,2'-diyl) phosphite] was pepared in accordance with instant Example 1. The product was recrystallized from ethyl acetate (compound A). The state of the art modification of formula I was prepared according to the procedure of Example 4 of US-A-4 318 845 and recrystallized from a mixture of acetonitrile and toluene (compound B). The results are summarized in Table 6.

**Table 6:**

| Property | Compound A | Compound B |
|---|---|---|
| Melting Point | 160°C | 134-140°C |
| Unit Cell Dimension | | |
| a | 20.0700 Å | 20.308 Å |
| b | 17.447 Å | 17.615 Å |
| c | 27.620 Å | 27.918 Å |
| β | 93.050° | 93.730° |
| Volume | 9674.5 Å³ | 9966 Å³ |
| Density (calc.) | 1.006 Mg/m³ | 0.986 Mg/m³ |

The procedure for the X-ray analysis performed is the same as provided in instant Example 1. Comparison of the data readily shows a difference in structure between the instant alpha, crystalline form (compound A) and the state of the art compound (compound B).

The unit cell of compound B contains an entrapped molecule of toluene. This was not recognized by the authors of US-A-4 318 845 or they failed to mention it In constrast, the crystal cell of compound A of the instant invention does not contain a molecule of solvent from any of the claimed recrystallization solvent systems.

The above fact is clearly reflected in the large difference in melting points between the alpha crystalline form (compound A) and the prior art material (compound B). Additionally, this fact is seen in comparing the difference between the cell dimensions, volume and density. In particular, a significant difference can be seen by comparing the volumes of the alpha crystalline form (9674.5 Å³) and the prior art material (9966 Å³).

## Claims

1. The alpha, monoclinic crystalline form of 2,2',2"-nitrilo[triethyl-tris-(3,3',5,5'-tetra-tert-butyl-1,1'-biphenyl-2,2'-diyl) phosphite], characterized by melting in the range of 145-165°C and by an X-ray diffraction pattern exhibiting lines of very high intensity at 5.2; lines of high intensity at 10.7, 16.6 and 17.4; lines of medium intensity at 5.8, 8.0, 8.9, 10.0, 10.1, 10.7, 15.7, 16.2 and 18.2; lines of weak intensity at 6.3, 6.5, 7.2, 11.6, 12.7, 13.6, 14.2, 14.9, 17.0, 18.7 and 19.6; and a relative configuration of the three dibenzo[d,f]-[1.3.2]dioxaphosphepin rings of R*, R*, R*.

2. A process for the preparation of the alpha, monoclinic crystalline form of the compound 2,2',2" -nitrilo[triethyl-tris-(3,3',5,5'-tetra-tert-butyl-1,1'-biphenyl-2,2'-diyl) phosphite] which comprises crystallizing or recrystallizing said compound from a mixture of an aromatic hydrocarbon solvent and an alkanol of 1 to 3 carbon atoms; from an ether solvent; from an ester solvent; or from a mixture of a halogenated aliphatic hydrocarbon solvent and an alkanol of 1 to 3 carbon atoms.

3. A process according to claim 2 wherein the crystallizing or recrystallizing is from a mixture of an aromatic hydrocarbon solvent and an alkanol of 1 to 3 carbon atoms.

4. A process according to claim 2 wherein the crystallizing or recrystallizing is from a mixture of benzene, toluene, o-xylene, m-xylene, p-xylene, 1,2,3-trimethylbenzene, 1,3,5-trimethylbenzene, 1,2,4-trimethylbenzene, 1,2,4,5-tetramethylbenzene, ethylbenzene, cumene, o-cymene, m-cymene, p-cymene, o-diisopropylbenzene or m-diisopropylbenzene and an alkanol of 1 to 3 carbon atoms; from methyl formate, ethyl formate, methyl acetate, ethyl acetate, n-butyl acetate, isobutyl acetate or amyl acetate; from diethyl ether, diisopropyl ether or methyl tert-butyl ether; or from a mixture of methylene chloride, chloroform, 1,2-dichloroethane or 1,1,2,2-tetrachloroethane and an alkanol of 1 to 3 carbon atoms.

5. A process according to claim 2 wherein the crystallizing or recrystallizing is from a mixture of benzene, toluene, o-xylene, m-xylene, p-xylene, 1,2,3-trimethylbenzene, 1,3,5-trimethylbenzene, 1,2,4-trimethylbenzene, 1,2,4,5-tetramethylbenzene, ethylbenzene, cumene, o-cymene, m-cymene, p-cymene, o-diisopropylbenzene, or m-diisopropylbenzene and an alkanol of 1 to 3 carbon atoms.

6. A process according to claim 5 wherein the crystallizing or recrystallizing is from a mixture of toluene and methanol; xylene and methanol; toluene and isopropanol; or, xylene and isopropanol.

7. A process according to claim 2 wherein the crystallizing or recrystallizing is from ethyl acetate or diethyl ether or from a mixture of isopropanol and dichloromethane.

8. A process according to claim 2 wherein the isolated crystalline mass is dried under vacuum at an elevated temperature.

9. The alpha, monoclinic crystalline form of 2,2',2"-nitrilo[triethyl-tris-(3,3',5,5'-tetra-tert-butyl-1,1'-biphenyl-2,2'-diyl) phosphite] obtainable by the process of claim 2.

10. A composition comprising
a) an organic material subjected to oxidative, thermal or light-induced degradation, and
b) the alpha, monoclinic crystalline form of 2,2',2"-nitrilo[triethyl-tris-(3,3',5,5'-tetra-tert-butyl-1,1'-biphenyl-2,2'-diyl) phosphite] as defined in claim 1 and 9.

11. A composition according to claim 10, additionally comprising, apart from components (a) and (b), further additives.

12. A composition according to claim 11, comprising, as further additives, phenolic antioxidants, light stabilizers or processing stabilizers.

13. A composition according to claim 11, comprising, as the further additive, at least one compound of benzofuran-2-one type.

14. A composition according to claim 10, comprising, as component (a), natural, semi-synthetic or synthetic polymers.

15. A composition according to claim 10, comprising, as component (a), thermoplastic polymers.

16. A composition according to claim 10, comprising, as component (a), a polyolefin.

17. A composition according to claim 10, comprising, as component (a), polyethylene or polypropylene.

18. Use of the alpha, monoclinic crystalline form of 2,2',2"-nitrilo[triethyl-tris-(3,3',5,5'-tetra-tert-butyl-1,1'-biphenyl-2,2'-diyl) phosphite], as defined in claim 1 and 9, as stabilizer for organic materials against oxidative, thermal or light-induced degradation.

19. Use according to claim 18, in which the alpha, monoclinic crystalline form of 2,2',2"-nitrilo[triethyl-tris-(3,3',5,5'-tetra-tert-butyl-1,1'-biphenyl-2,2'-diyl) phosphite], as defined in claim 1 and 9, is used as processing stabilizer (thermal stabilizer) in thermoplastic polymers.

20. A process for stabilizing an organic material against oxidative, thermal or light-induced degradation, which comprises incorporating therein or applying thereto the alpha, monoclinic crystalline form of 2,2',2"-nitrilo[triethyl-tris-(3,3',5,5'-tetra-tert-butyl-1,1'-biphenyl-2,2'-diyl) phosphite] as defined in claim 1 and 9.

## Patentansprüche

1. Alpha, monokline kristalline Form von 2,2',2"-Nitrilo[triethyl-tris-(5,5',5,5'-tetra-tert.-butyl-1,1'-biphenyl-2,2'-diyl)-phosphit], gekennzeichnet durch Schmelzen im Bereich von 145 bis 165°C und durch ein Röntgenbeugungsmuster mit Linien von sehr hoher Intensität bei 5,2; mit Linien von hoher Intensität bei 10,7, 16,6 und 17,4; Linien von mittlerer Intensität bei 5,8, 8,0, 8,9, 10,0, 10,1, 10,7, 15,7, 16,2 und 18,2; Linien von schwacher Intensität bei 6,3, 6,5, 7,2, 11,6, 12,7, 13,6, 14,2, 14,9, 17,0, 18,7 und 19,6; und einer relativen Konfiguration der drei Dibenzo-[d,f]-[1.3.2]dioxaphosphepin-Ringe von R*, R*, R*.

2. Verfahren zur Herstellung der alpha, monoklinen kristallinen Form der Verbindung 2,2',2"-Nitrilo-[triethyl-tris-(5,5',5,5'-tetra-tert.-butyl-1,1'-biphenyl-2,2'-diyl)-phosphit], welches die Kristallisation oder Umkristallisation dieser Verbindung aus einer Mischung eines aromatischen Kohlenwasserstoff-Lösungsmittels und eines Alkanols mit 1 bis 3 Kohlenstoffatomen; aus einem Ether-Lösungsmittel; aus einem Ester-Lösungsmittel; oder aus einer Mischung eines halogenierten, aliphatischen Kohlenwasserstoff-Lösungsmittels und eines Alkanols mit 1 bis 3 Kohlenstoffatomen umfaßt.

3. Verfahren gemäß Anspruch 2, worin die Kristallisation oder Umkristallisation aus einer Mischung eines aromatischen Kohlenwasserstoff-Lösungsmittels und eines Alkanols mit 1 bis 3 Kohlenstoffatomen erfolgt.

4. Verfahren gemäß Anspruch 2, worin die Kristallisation oder Umkristallisation aus einer Mischung von Benzol, Toluol, o-Xylol, m-Xylol, p-Xylol, 1,2,3-Trimethylbenzol, 1,3,5-Trimethylbenzol, 1,2,4-Trimethylbenzol, 1,2,4,5-Tetramethylbenzol, Ethylbenzol, Cumol, o-Cymol, m-Cymol, p-Cymol, o-Diisopropylbenzol oder m-Diisopropylbenzol und einem Alkanol mit 1 bis 3 Kohlenstoffatomen; aus Methylformiat, Ethylformiat, Methylacetat, Ethylacetat, n-Butylacetat, Isobutylacetat oder Amylacetat; aus Diethylether, Diisopropylether oder Methyl-tert.-butylether; oder aus einer Mischung von Methylenchlorid, Chloroform, 1,2-Dichlorethan oder 1,1,2,2-Tetrachlorethan und einem Alkanol mit 1 bis 3 Kohlenstoffatomen erfolgt.

5. Verfahren gemäß Anspruch 2, worin die Kristallisation oder Umkristallisation aus einer Mischung von Benzol, Toluol, o-Xylol, m-Xylol, p-Xylol, 1,2,3-Trimethylbenzol, 1,3,5-Trimethylbenzol, 1,2,4-Trimethylbenzol, 1,2,4,5-Tetramethylbenzol, Ethylbenzol, Cumol, o-Cymol, m-Cymol, p-Cymol, o-Diisopropylbenzol oder m-Diisopropylbenzol und einem Alkanol mit 1 bis 3 Kohlenstoffatomen erfolgt.

6. Verfahren gemäß Anspruch 5, worin die Kristallisation oder Umkristallisation aus einer Mischung von Toluol und Methanol; Xylol und Methanol; Toluol und Isopropanol; oder Xylol und Isopropanol erfolgt.

7. Verfahren gemäß Anspruch 2, worin die Kristallisation oder Umkristallisation aus Ethylacetat oder Diethylether oder aus einer Mischung von Isopropanol und Methylenchlorid erfolgt.

8. Verfahren gemäß Anspruch 2, worin die isolierte, kristalline Masse unter Vakuum bei erhöhter Temperatur getrocknet wird.

9. Alpha, monokline kristalline Form von 2,2',2"-Nitrilo-[triethyl-tris-(5,3',5,5'-tetra-tert.-butyl-1,1'-biphenyl-2,2'-diyl)-phosphit], erhältlich nach dem Verfahren von Anspruch 2.

10. Zusammensetzung, enthaltend
a) ein organisches Material, das einem oxidativen, thermischen oder lichtbedingten Abbau unterliegt, und
b) die alpha, monokline kristalline Form von 2,2",2"-Nitrilo-[triethyl-tris-(3,5',5,5'-tetra-tert.-butyl-1,1'-biphenyl-2,2'-diyl)-phosphit], wie in Anspruch 1 und 9 definiert.

11. Zusammensetzung gemäß Anspruch 10, enthaltend zusätzlich neben den Komponenten (a) und (b) weitere Additive.

12. Zusammensetzung gemäß Anspruch 11, enthaltend als weitere Additive phenolische Antioxidantien, Lichtstabilisatoren oder Verfahrensstabilisatoren.

13. Zusammensetzung gemäß Anspruch 11, enthaltend als weiteres Additiv zumindest eine Verbindung vom Benzofuran-2-on-Typ.

14. Zusammensetzung gemäß Anspruch 10, enthaltend als Komponente (a) natürliche, semisynthetische oder synthetische Polymere.

15. Zusammensetzung gemäß Anspruch 10, enthaltend als Komponente (a) thermoplastische Polymere.

16. Zusammensetzung gemäß Anspruch 10, enthaltend als Komponente (a) ein Polyolefin.

17. Zusammensetzung gemäß Anspruch 10,enthaltend als Komponente (a) Polyethylen oder Polypropylen.

18. Verwendung der alpha, monoklinen kristallinen Form von 2,2',2"-Nitrilo-[triethyl-tris-(3,5',5,5'-tetra-tert.-butyl-1,1'-biphenyl-2,2'-diyl)-phosphit], wie in Anspruch 1 und 9 definiert, als Stabilisator für organische Materialien gegenüber oxidativem, thermischem oder lichtbedingtem Abbau.

19. Verwendung gemäß Anspruch 18, worin die alpha, monokline kristalline Form von 2,2',2"-Nitrilo-[triethyl-tris-(3,3',5,5'-tetra-tert.-butyl-1,1'-biphenyl-2,2'-diyl)-phosphit], wie in Anspruch 1 und 9 definiert, als Verfahrensstabilisator (thermischer Stabilisator) bei thermoplastischen Polymeren eingesetzt wird.

20. Verfahren zur Stabilisierung eines organischen Materials gegenüber oxidativem, thermischem oder lichtbedingtem Abbau, das das Einarbeiten oder das Aufbringen der alpha, monoklinen kristallinen Form von 2,2',2"-Nitrilo-[triethyl-tris-(5,5',5,5'-tetra-tert.-butyl-1,1'-biphenyl-2,2'-diyl)-phosphit], wie in Anspruch 1 und 9 definiert, umfaßt.

## Revendications

1. Forme cristalline monoclinique alpha du phosphite de 2,2',2"-nitrilo[triéthyl-tris-(3,3',5,5'-tétra-tert-butyl-1,1'-biphényl-2,2'-diyle)], caractérisée par un point de fusion dans l'intervalle de 145 à 165 °C et par une configuration de la diffraction des rayons X présentant des lignes de très haute intensité à 5,2 ; des lignes de haute intensité à 10,7, 16,6 et 17,4 ; des lignes de moyenne intensité à 5,8, 8,0, 8,9, 10,0, 10,1, 10,7, 15,7, 16,2 et 18,2 ; des lignes de faible intensité à 6,3, 6,5, 7,2, 11,6, 12,7, 13,6, 14,2, 14,9, 17,0, 18,7 et 19,6 ; et une configuration relative des trois cycles dibenzo[d,f] [1,3,2]dioxaphosphépine de R*,R*,R*.

2. Procédé pour la préparation de la forme cristalline monoclinique alpha du composé phosphite de 2,2',2"-nitrilo[triéthyl-tris-(3,3',5,5'-tétra-tert-butyl-1,1'-biphényl-2,2'-diyle)] qui comprend la cristallisation ou la recristallisation dudit composé dans un mélange de solvants hydrocarbonés aromatiques et d'un alcanol comportant de 1 à 3 atomes de carbone, dans un solvant éther, dans un solvant ester ; ou dans un mélange d'un solvant hydrocarboné aliphatique et d'un alcanol de 1 à 3 atomes de carbone.

3. Procédé selon la revendication 2, où la cristallisation ou la recristallisation est effectuée dans un mélange d'un solvant hydrocarboné aromatique et d'un alcanol comportant de 1 à 3 atomes de carbone.

4. Procédé selon la revendication 2, où la cristallisation ou la recristallisation est effectuée dans un mélange de benzène, de toluène, d'o-xylène, de m-xylène, de p-xylène, de 1,2,3-triméthylbenzène, de 1,3,5-triméthyl-benzène, de 1,2,4-triméthylbenzène, de 1,2,4,5-tétraméthylbenzène, d'éthylbenzène, de cumène, d' o-cymène, de m-cymène, de p-cymène, d'o-diisopropylbenzène ou de m-diiso-propylbenzène et d'un alcanol comportant de 1 à 3 atomes de carbone ; dans le formiate de méthyle, le formiate d'éthyle, l'acétate de méthyle, l'acétate d'éthyle, l'acétate de n-butyle, l'acétate l'isobutyle ou l'acétate d'amyle ; dans le l'éther diéthylique, l'éther diisopropylique ou l'éther méthyl-tert-butylique ; ou dans un mélange de chlorure de méthylène, de chloroforme, de 1,2-dichloroéthane ou de 1,1,2,2-tétrachloroéthane et d'un alcanol comportant de 1 à 3 atomes de carbone.

5. Procédé selon la revendication 2, où la cristallisation ou la recristallisation est effectuée dans un mélange de benzène, de toluène, d'o-xylène, de m-xylène, de p-xylène, de 1,2,3-triméthylbenzène, de 1,3,5-triméthyl-benzène, de 1,2,4-triméthylbenzène, de 1,2,4,5-tétraméthyl-benzène, d'éthylbenzène, de cumène, d'o-cymène, de m-cymène, de p-cymène, d'o-diisopropylbenzène ou de m-diisopropylbenzène, et d'un alcanol comportant de 1 à 3 atomes de carbone.

6. Procédé selon la revendication 5, où la cristallisation ou la recristallisation est effectuée dans un mélange de toluène et de méthanol ; de xylène et de méthanol, de toluène et d'isopropanol ; ou de xylène et d'isopropanol.

7. Procédé selon la revendication 2, où la cristallisation ou la recristallisation est effectuée dans l'acétate d'éthyle ou l'éther diéthylique ou dans un mélange d'isopropanol et de dichlorométhane.

8. Procédé selon la revendication 2, où la matière cristalline isolée est séchée sous vide à une température élevée.

9. La forme cristalline monoclinique alpha du phosphite de 2,2',2"-nitrilo[triéthyl-tris-(3,3',5,5'-tétra-tert-butyl-1,1'-biphényl-2,2'-diyle)] peut être obtenue par le procédé de la revendication 2.

10. Composition comprenant :
a) une matière organique sujette à la dégradation par oxydation, par la chaleur ou par la lumière, et
b) la forme cristalline monoclinique alpha du phosphite de 2,2',2"-nitrilo[triéthyl-tris-(3,3',5,5'-tétra-tert-butyl-1,1'-biphényl-2,2'-diyle)] définie dans les revendications 1 et 9.

11. Composition selon la revendication 10 comprenant de plus, outre les composants (a) et (b), d'autres additifs.

12. Composition selon la revendication 11 comprenant comme autres additifs des anti-oxydants phénoliques, des stabilisants à la lumière ou des stabilisants de mise en oeuvre.

13. Composition selon la revendication 11 comprenant comme autres additifs au moins un composé de type benzofuran-2-one.

14. Composition selon la revendication 10 comprenant comme composant (a) des polymères naturels, semi-synthétiques ou synthétiques.

15. Composition selon la revendication 10 comprenant comme composant (a) des polymères thermoplastiques.

16. Composition selon la revendication 10 comprenant comme composant (a) une polyoléfine.

17. Composition selon la revendication 10 comprenant comme composant (a) le polyéthylène ou le polypropylène.

18. Utilisation de la forme cristalline monoclinique alpha du phosphite de 2,2',2"-nitrilo[triéthyl-tris-(3,3',5,5'-tétra-tert-butyl-1,1'-biphényl-2,2'-diyle)] telle que définie dans les revendications 1 et 9 comme stabilisant pour matières organiques contre la dégradation par oxydation, par la chaleur ou par la lumière.

19. Utilisation selon la revendication 18, où la forme cristalline monoclinique alpha du phosphite de 2,2',2"-nitrilo[triéthyl-tris-(3,3',5,5'-tétra-tert-butyl-1,1'-biphényl-2,2'-diyle)] telle que définie dans les revendications 1 et 9 est utilisée comme stabilisant de mise en oeuvre (stabilisant thermique) dans les polymères thermoplastiques.

20. Procédé pour la stabilisation d'une matière organique contre la dégradation par oxydation, par la chaleur ou par la lumière qui comprend l'incorporation ou l'application à celle-ci de la forme cristalline monoclinique alpha du phosphite de 2,2',2"-nitrilo[triéthyl-tris-(3,3',5,5'-tétra-tert-butyl-1,1'-biphényl-2,2'-diyle)] telle que définie dans les revendications 1 et 9.
